# EUROPÄISCHE PATENTSCHRIFT

(11) **EP 3 417 686 B1**
(45) Veröffentlichungstag und Bekanntmachung des Hinweises auf die Patenterteilung: **26.01.2022**
(21) Anmeldenummer: 18163839.6
(22) Anmeldetag: 26.03.2018
(51) Int. Cl.: A01B 69/00

(54) **LANDWIRTSCHAFTLICHE ARBEITSMASCHINE**
AGRICULTURAL MACHINE
ENGIN AGRICOLE

(30) Priorität: 21.06.2017 DE 102017113726
(43) Veröffentlichungstag der Anmeldung: 26.12.2018
(73) Patentinhaber: CLAAS E-Systems GmbH, 49201 Dissen am Teutoburger Wald (DE)
(72) Erfinder: Jensen, Martin Falk, 1018 Lausanne (CH); Lisouski, Pavel, 2720 Vanlose (DK); Laysgaard Andersen, Gert, 3450 Alleroed (DK); Blas, Morten Rufus, 2800 Kgs. Lyngby (DK)
(74) Vertreter: Budach, Steffen

(56) Entgegenhaltungen:
- EP-A1- 1 762 129
- EP-A1- 2 135 498
- EP-A1- 3 171 241
- DE-A1-102011 078 292
- US-A1- 2004 264 761
- US-A1- 2012 072 068
- US-A1- 2015 354 943

## Beschreibung

Die Erfindung betrifft eine landwirtschaftliche Arbeitsmaschine gemäß dem Anspruch 1. Der Begriff "landwirtschaftliche Arbeitsmaschine" ist vorliegend weit zu verstehen. Darunter fallen nicht nur Erntemaschinen wie Mähdrescher und Feldhäcksler, sondern auch Zugmaschinen wie Traktoren o. dgl.

Im Rahmen der zunehmenden Automatisierung landwirtschaftlicher Arbeitsmaschinen werden diese inzwischen häufig mit Kameraanordnungen und anderen Sensoranordnungen ausgestattet, um den Bediener beim Fahren und bei der Verrichtung landwirtschaftlicher Arbeit zu unterstützen. Insbesondere können landwirtschaftliche Arbeitsaggregate der landwirtschaftlichen Arbeitsmaschine, d. h. Komponenten und Geräte, insbesondere Anbaugeräte, die zur Verrichtung oder Unterstützung landwirtschaftlicher Arbeit dienen, auf diese Weise überwacht und gesteuert werden.

Die bekannte landwirtschaftliche Arbeitsmaschine (US 8,712,144 B2), von der die Erfindung ausgeht, ist mit einer Kameraanordnung ausgestattet, die eine 3D-Kamera aufweist, die den Feldbestand insbesondere vor der landwirtschaftlichen Arbeitsmaschine erfasst und entsprechende 3D-Informationen generieren kann. Zu diesem Zweck verfügt die 3D-Kamera über zwei Kameraobjektive, über die die Aufnahme stereoskopischer Bildpaare entlang zweier verschiedener Blickachsen möglich ist. Die beiden Blickachsen gehen dabei jeweils von dem optischen Zentrum des jeweiligen Kameraobjektivs aus und erstrecken sich jeweils in eine Blickrichtung. Dabei sind die beiden Kameraobjektive und entsprechend die optischen Zentren derselben auf einer sogenannten Basislinie angeordnet, die sich in einer horizontalen Ebene erstreckt. Die horizontale Ebene ist auf die landwirtschaftliche Arbeitsmaschine bezogen und erstreckt sich parallel zur Aufstandsfläche derselben. Die optischen Zentren sind somit bei diesem Stand der Technik in einer Richtung nebeneinander angeordnet, die sich parallel zur Oberfläche des zu bearbeitenden Bodens erstreckt.

Die 3D-Kamera der bekannten landwirtschaftlichen Arbeitsmaschine ist zwar dazu geeignet, den Feldbestand in Fahrtrichtung abzutasten und darüber 3D-Informationen (Informationen über die Breite, Höhe und Tiefe von Objekten und/oder zwischen Objekten) zu generieren. Sollen aber Pflanzenreihen abgefahren werden, um beispielsweise den Boden zwischen den Pflanzenreihen zu bearbeiten, ist die Detektion der Pflanzenreihen bzw. deren Position relativ ungenau, da die Kameraobjektive aufgrund ihres Abstands zueinander, der sog. Basis, die jeweilige Pflanzenreihe aus unterschiedlichen Richtungen erfassen. Dies führt zu einer gewissen Unschärfe der Aufnahme und entsprechend zu einer Ungenauigkeit der 3D-Informationen. Dies wiederum hat Auswirkungen auf die Genauigkeit der Bearbeitung des Feldbestands mit dem jeweiligen landwirtschaftlichen Arbeitsaggregat, beispielsweise einer mechanischen Hacke oder einem Grubber. Die Genauigkeit wird zusätzlich noch durch Schadpflanzen, die um die Nutzpflanzen herum wachsen, verringert, insbesondere, wenn diese eine ähnliche Höhe wie die Nutzpflanzen haben.

Der Erfindung liegt das Problem zugrunde, die bekannte landwirtschaftliche Arbeitsmaschine derart auszugestalten und weiterzubilden, dass die Bearbeitungsgenauigkeit beim Durchfahren eines Feldbestands mit einem landwirtschaftlichen Arbeitsaggregat erhöht werden kann.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Wesentlich ist die grundsätzliche Überlegung, dass bei einer gegenüber der Horizontalen, insbesondere der horizontalen Ebene, geneigten Basislinie der 3D-Kamera, d. h. der Verbindungslinie zwischen den optischen Zentren der 3D-Kamera, der horizontale Abstand zwischen den optischen Zentren kleiner als die Basis (absoluter Abstand zwischen den optischen Zentren) der 3D-Kamera ist. Bei einer Anordnung der Basislinie in einer vertikalen Ebene, also einer Neigung gegenüber der horizontalen Ebene um 90%, liegen die optischen Zentren sogar in einer gemeinsamen vertikalen Ebene, so dass der horizontale Abstand zwischen den optischen Zentren Null ist. Eine solche Ausrichtung der 3D-Kamera hat den Vorteil, dass die beiden Blickachsen bzw. Blickrichtungen der 3D-Kamera in horizontaler Richtung näher beieinander liegen bzw. bei exakt vertikaler Ausrichtung der Basislinie in einer vertikalen Ebene nicht voneinander beabstandet sind, wodurch die im Wesentlichen vertikal wachsenden Nutzpflanzen und entsprechenden Reihen von Nutzpflanzen mit einer höheren Genauigkeit detektiert werden können. Im Unterschied zum Stand der Technik, bei dem die Basislinie zwischen den optischen Zentren horizontal verläuft, wird vorschlagsgemäß eine Unschärfe im Randbereich der Pflanzen bzw. Pflanzenreihen und eine entsprechendes Fehlerkennungsrisiko reduziert oder im Idealfall sogar vermieden. Die von der Kameraanordnung mittels der 3D-Kamera generierten 3D-Informationen über den Feldbestand, insbesondere über die Position und/oder die Höhe der jeweiligen Nutzpflanze oder Nutzpflanzenreihe ist entsprechend wesentlich präziser als beim Stand der Technik, was auch ein präziseres Bearbeiten des Feldbestands, beispielsweise mit einem landwirtschaftlichen Arbeitsaggregat in Form einer mechanischen Hacke oder eines Grubbers, ermöglicht.

Ganz allgemein wird vorgeschlagen, dass die Basislinie der vorschlagsgemäß eingesetzten 3D-Kamera der landwirtschaftlichen Arbeitsmaschine, die die optischen Zentren, von denen die Blickachsen ausgehen, verbindet, bezüglich einer horizontalen Ebene geneigt ist und vorzugsweise in einer vertikalen Ebene verläuft (Anspruch 2). Bei der 3D-Kamera handelt es sich insbesondere um eine Stereokamera, also eine Kamera mit insbesondere zwei Kameraobjektiven zur Aufnahme stereoskopischer Halbbilder. Spezielle Varianten der Stereokameras besitzen auch mehr Kameraobjektive, beispielsweise vier Kameraobjektive, und sind von der genannten Stereokamera mit umfasst. Ebenfalls umfasst sind Kameras mit nur einem Kameraobjektiv, die über einen optischen Aufsatz ebenfalls stereoskopische Bildpaare aus Halbbildern erzeugen können. Grundsätzlich ist es auch denkbar, zwei Einzelkameras vorzusehen, die jeweils Einzelbilder erzeugen, die zu stereoskopischen Bildpaaren zusammengeführt werden bzw. umgewandelt werden. All diese 3D-Kameras haben gemein, dass sie den Feldbestand, insbesondere vor der landwirtschaftlichen Arbeitsmaschine und/oder vor dem landwirtschaftlichen Arbeitsaggregat, erfassen und 3D-Informationen des Feldbestands durch die Aufnahme stereoskopischer Bildpaare entlang zweier verschiedener Blickachsen generieren können, wobei die Blickachsen von optischen Zentren der 3D-Kamera bzw. der Einzelobjektive, ausgehen, die wiederum durch besagte Basislinie miteinander verbunden sind.

Bei den bevorzugten Ausgestaltungen gemäß den Ansprüchen 3 und 4 ist die Kameraanordnung und/oder 3D-Kamera auch verstellbar, insbesondere schwenkbar und/oder höhenverstellbar. Die Verschwenkbarkeit erlaubt es, den Winkel der Blickachsen zur horizontalen Ebene bzw. zum Boden zu verändern. Die Höhenverstellbarkeit ermöglicht es, die optischen Zentren bzw. den jeweiligen Ausgangspunkt der beiden Blickachsen in der Vertikalen zu verstellen. Beides erlaubt eine individuelle Anpassung an unterschiedliche Arten von Nutzpflanzen und/oder Fruchtarten.

Anspruch 5 betrifft bevorzugte Ausgestaltungen der verwendeten 3D-Kamera.

In Anspruch 6 sind mittels der 3D-Kamera generierbare 3D-Informationen spezifiziert, wonach es sich insbesondere um Informationen über die Pflanzenhöhe der Nutzpflanzen, den Pflanzenabstand der Nutzpflanzen quer (orthogonal) zur Fahrtrichtung, d. h. den Pflanzenreihenabstand, den Pflanzenabstand der Nutzpflanzen in Fahrtrichtung und/oder über Pflanzenbestandteile wie Blätter und Stängel der Nutzpflanzen handeln kann. Die 3D-Informationen können aber auch Informationen über Schadpflanzen enthalten, insbesondere auch hier über die Pflanzenhöhe der Schadpflanzen, den Pflanzenabstand der Schadpflanzen quer zur Fahrtrichtung, den Pflanzenabstand der Schadpflanzen in Fahrtrichtung etc.

Bei der Ausgestaltung nach Anspruch 7 ist die Kameraanordnung konfiguriert, mittels der 3D-Kamera auch Farbinformationen über den Feldbestand zu generieren. Damit lassen sich beispielsweise Nutzpflanzen von Schadpflanzen und/oder Nutzpflanzen vom Ackerboden unterscheiden. Die Farbinformationen können auch Farbinformationen über Pflanzenbestandteile der Nutzpflanzen und/oder Schadpflanzen sein. Beispielsweise können aufgrund unterschiedlicher Farben die Stängel von Blättern unterschieden werden oder es können Verholzungen erkannt werden. Auch Aussagen über den Reifegrad und/oder den Stickstoffanteil lassen sich dadurch treffen.

Anspruch 8 definiert, dass die 3D-Kamera zwischen einem 3D-Modus und einem 2D-Modus umschaltbar sein kann. Im 3D-Modus werden besagte 3D-Informationen generiert und im 2D-Modus die Farbinformationen. Die Gesamtheit an Informationen, d. h. 3D-Informationen und Farbinformationen, kann dann anschließend insgesamt dazu herangezogen werden, die Höhe und/oder Position der Nutzpflanzen und/oder Schadpflanzen möglichst exakt zu bestimmen. Dabei ist es denkbar, dass im 2D-Modus monoskopische Einzelbilder, d. h. Einzelbilder ohne 3D-Informationen, entlang einer der Blickachsen aufgenommen und verarbeitet werden. Insbesondere ist dann zur Erzeugung solcher Einzelbilder im 2D-Modus nur ein Kameraobjektiv der 3D-Kamera aktiv, um das jeweilige Einzelbild zu erzeugen. Es ist aber auch denkbar, dass über zwei oder mehr Kameraobjektive der 3D-Kamera monoskopische Einzelbilder erzeugt werden, die anschließend verarbeitet werden. Auch ist es denkbar, die von der 3D-Kamera erzeugbaren stereoskopischen Bildpaare aus Halbbildern in Einzelbilder zu zerlegen und die Einzelbilder im 2D-Modus jeweils einzeln zu verarbeiten, um daraus die entsprechenden Farbinformationen zu generieren (Anspruch 8).

Zusätzlich zu der zuvor erwähnten Kameraanordnung mit der 3D-Kamera, die eine erste Sensoranordnung bildet, kann gemäß der bevorzugten Ausgestaltung nach Anspruch 10 ferner mindestens eine weitere Sensoranordnung vorgesehen sein, die jeweils mit mindestens einem Sensor Sensordaten generieren kann. Bei dem Sensor kann es sich beispielsweise um einen Geschwindigkeitssensor, einen Arbeitshöhensensor (zur Erfassung Arbeitshöhe des Arbeitsaggregats) oder einen Lenkwinkelsensor handeln.

All diese Sensordaten, d. h. die 3D-Informationen, die Farbinformationen und/oder die weiteren Sensordaten, können von einem Fahrerassistenzsystem der landwirtschaftlichen Arbeitsmaschine genutzt werden, um die landwirtschaftliche Arbeitsmaschine und/oder das landwirtschaftliche Arbeitsaggregat zu steuern (Anspruch 11). Insbesondere kann dadurch das landwirtschaftliche Arbeitsaggregat optimal zu den Pflanzenreihen ausgerichtet werden.

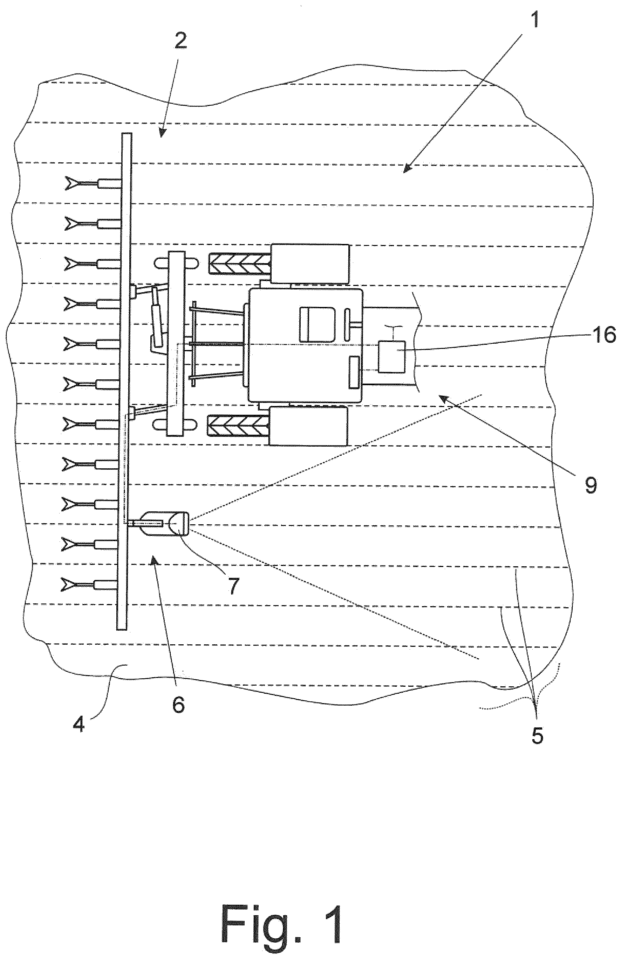

Im Folgenden wird die Erfindung anhand einer lediglich ein Ausführungsbeispiel darstellenden Zeichnung näher erläutert. In der Zeichnung zeigt
Fig. 1 eine vorschlagsgemäße landwirtschaftliche Arbeitsmaschine mit einem landwirtschaftlichen Arbeitsaggregat in einer Betriebssituation,
Fig. 2 eine Seitenansicht des landwirtschaftlichen Arbeitsaggregats der landwirtschaftlichen Arbeitsmaschine aus Fig. 1 mit aufgesetzter 3D-Kamera und
Fig. 3 in a) eine Draufsicht auf die 3D-Kamera der landwirtschaftlichen Arbeitsmaschine aus Fig. 1 und in b) den von der 3D-Kamera erfassbaren Bereich des Feldbestands.

Die vorschlagsgemäße Lösung lässt sich auf einen weiten Bereich landwirtschaftlicher Arbeitsmaschinen, insbesondere selbstfahrender landwirtschaftlicher Arbeitsmaschinen, anwenden. Dazu gehören Zugmaschinen, insbesondere Traktoren, und Erntemaschinen, insbesondere Mähdrescher, Feldhäcksler o.dgl. Bei dem dargestellten und insoweit bevorzugten Ausführungsbeispiel handelt es sich bei der landwirtschaftlichen Arbeitsmaschine 1 um einen Traktor, der in an sich üblicher Weise mit einem landwirtschaftlichen Arbeitsaggregat 2 in Form eines Anbaugeräts ausgestattet ist. Bei dem landwirtschaftlichen Arbeitsaggregat 2 handelt es sich hier beispielsweise um eine mechanische Hacke oder um einen Grubber. Die Ausführungen zu einem Traktor bzw. zu einem solchen landwirtschaftlichen Arbeitsaggregat gelten für alle anderen Arten von landwirtschaftlichen Arbeitsmaschinen bzw. landwirtschaftlichen Arbeitsaggregaten entsprechend.

Die landwirtschaftliche Arbeitsmaschine 1 und das landwirtschaftliche Arbeitsaggregat 2 werden von einer Bedienperson, dem Fahrer, bedient, wobei als Bedienerunterstützung ein Fahrerassistenzsystem 16 vorgesehen ist, welches beispielsweise die Geschwindigkeit und/oder den Lenkwinkel der landwirtschaftlichen Arbeitsmaschine 1 und/oder die Arbeitshöhe des landwirtschaftlichen Arbeitsaggregats 2, insbesondere vollautomatisch, steuern kann. Die Steuerung von landwirtschaftlicher Arbeitsmaschine 1 und/oder landwirtschaftlichem Arbeitsaggregat 2 durch das Fahrerassistenzsystem 16 ermöglicht eine besonders präzise Bearbeitung eines Feldbestands umfassend eine Vielzahl von Nutzpflanzen. Beispielsweise kann mit dem hier dargestellten landwirtschaftlichen Arbeitsaggregat 2 in Form einer mechanischen Hacke oder eines Grubbers, der Boden 4 zwischen den Nutzpflanzen 3 besonders präzise und umfassend bearbeitet, beispielsweise aufgebrochen, werden, ohne die Nutzpflanzen 3 dabei zu beschädigen. Der Bereich zwischen den Nutzpflanzen 3 wird dabei besonders präzise erkannt, sogar dann, wenn dieser von Schadpflanzen (Unkraut) bewachsen ist. Insbesondere können Pflanzenreihen 5 mit mehreren Nutzpflanzen 3 besonders exakt erkannt werden, was nun im Folgenden näher erläutert wird.

Die vorschlagsgemäße landwirtschaftliche Arbeitsmaschine 1 weist eine Kameraanordnung 6 mit einer 3D-Kamera 7 auf, die hier und vorzugsweise eine Stereokamera mit zwei Kameraobjektiven 8a und 8b ist. Die 3D-Kamera 7 ist hier und vorzugsweise auf dem landwirtschaftlichen Arbeitsaggregat 2 montiert, kann aber grundsätzlich auch auf dem Fahrzeug 9 angeordnet werden, an das das Arbeitsaggregat 2 montiert ist.

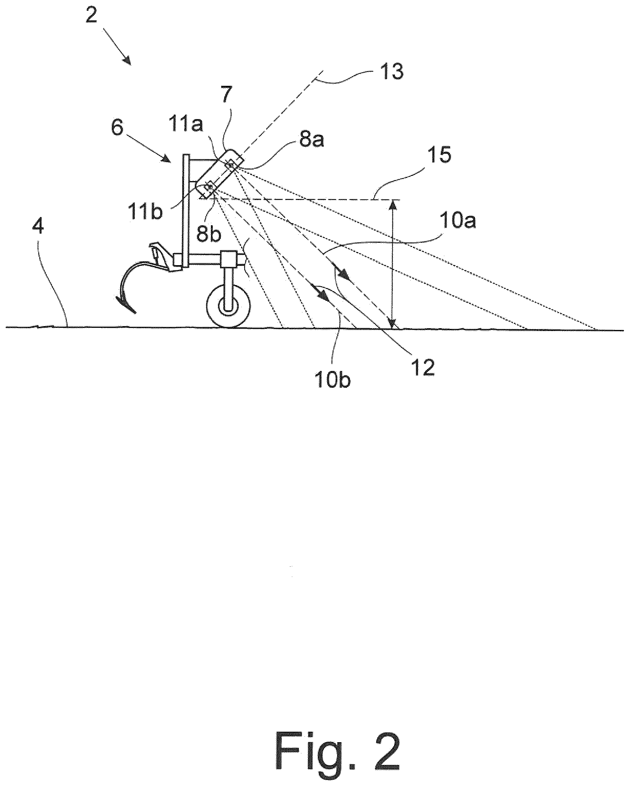

Die Kameraanordnung 6 ist konfiguriert, mittels der 3D-Kamera 7 den Feldbestand, d.h. die Nutzpflanzen 3 bzw. Pflanzenreihen 5 aus Nutzpflanzen 3, insbesondere in Fahrtrichtung vor dem landwirtschaftlichen Arbeitsaggregat 2, zu erfassen und entsprechende 3D-Informationen des Feldbestands zu generieren, indem mit der 3D-Kamera 7 stereoskopische Bildpaare entlang zweier verschiedener Blickachsen 10a, 10b aufgenommen werden. Die Blickachsen 10a, 10b sind hier definiert als die Achsen, die von den optischen Zentren 11a, 11b der 3D-Kamera 7 bzw. der Kameraobjektive 8a und 8b der 3D-Kamera 7 in die Blickrichtung 12 verlaufen. Wie Fig. 2 hier beispielhaft zeigt, ist die Blickrichtung 12 der 3D-Kamera 7 hier etwa 45° zur horizontalen Ebene 15 geneigt. Die optischen Zentren 11a, 11b der 3D-Kamera 7 sind durch eine Basislinie 13 miteinander verbunden, die bezüglich der horizontalen Ebene 15 geneigt ist, hier entsprechend ebenfalls um 45°. Die Basislinie 13 erstreckt sich, wie Fig. 2 zeigt, hier und vorzugsweise in einer Ebene 14, die sich orthogonal zur horizontalen Ebene 15 erstreckt.

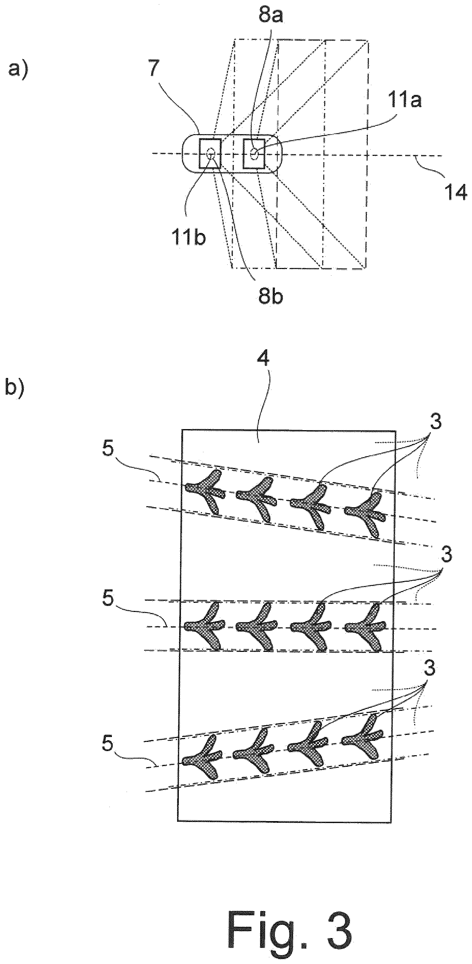

Vorteil einer solchen Ausrichtung der Kameraanordnung 6 bzw. 3D-Kamera 7 ist, dass die Blickachsen 10a, 10b hier und vorzugsweise in ein und derselben vertikalen Ebene 14 verlaufen und somit in diesem Fall keinen horizontalen Abstand voneinander haben. Ein solcher horizontaler Abstand bzw. Versatz hat im Stand der Technik dazu geführt, dass Pflanzenreihen 5 nicht exakt erkannt werden konnten. Die vorschlagsgemäße landwirtschaftliche Arbeitsmaschine 1 reduziert bzw. verhindert Fehler aufgrund eines solchen Versatzes in der Horizontalen. Auf diese Weise lassen sich einzelne Nutzpflanzen 3 bzw. Pflanzenreihen 5 besonders präzise hinsichtlich ihrer Position und/oder Pflanzenhöhe erfassen, was in Fig. 3b dargestellt ist (hier ist kein nennenswerter Versatz zwischen den über die 3D-Kamera 7 ermittelten Begrenzungslinien der Pflanzenreihen 5 vorhanden), und entsprechend kann der Feldbestand, wie zuvor erläutert, besonders präzise und umfassend bearbeitet werden.

Besonders bevorzugt ist die Kameraanordnung 6 und/oder die 3D-Kamera 7 in einer zur horizontalen Ebene 15 geneigten Ebene, insbesondere in einer zur horizontalen Ebene 15 orthogonalen Ebene 14, schwenkbar und/oder in der Vertikalen höhenverstellbar. Auf diese Weise lässt sich die 3D-Kamera 7 an unterschiedliche Bedingungen, insbesondere an unterschiedliche Nutzpflanzenarten und/oder Fruchtarten, anpassen.

Wie bereits zuvor angedeutet, weist die 3D-Kamera 7 hier und vorzugsweise zwei Kameraobjektive 8a und 8b auf, von denen ausgehend sich jeweils eine zugeordnete Blickachse 10a bzw. 10b erstreckt. Grundsätzlich ist es aber auch denkbar, dass die 3D-Kamera 7 nur ein einzelnes Kameraobjektiv aufweist und einen die Bildpaare erzeugenden optischen Aufsatz (hier nicht dargestellt) aufweist. Auch die Verwendung zweier Einzelkameras (hier nicht dargestellt) ist denkbar, um entsprechende stereoskopische Bildpaare zu erzeugen.

Die mittels der 3D-Kamera 7 generierten 3D-Informationen sind hier und vorzugsweise Informationen über die Pflanzenhöhe der Nutzpflanzen 3, über den Pflanzenabstand der Nutzpflanzen 3 quer zur Fahrtrichtung und somit den Abstand der Pflanzenreihen 5 zueinander, über den Pflanzenabschnitt der Nutzpflanzen 3 in Fahrtrichtung und/oder über Pflanzenbestandteile der Nutzpflanzen 3, Letzteres insbesondere zur Unterscheidung von Blättern und Stängeln der Nutzpflanzen 3. Grundsätzlich ist es auch denkbar, als 3D-Informationen Informationen über die Pflanzenhöhe von Schadpflanzen, den Pflanzenabstand von Schadpflanzen quer zur Fahrtrichtung, den Pflanzenabstand von Schadpflanzen in Fahrtrichtung o. dgl. zu generieren.

Die vorschlagsgemäß verwendete Kameraanordnung 6 bzw. 3D-Kamera 7 ist hier und vorzugsweise zusätzlich konfiguriert, Farbinformationen zu generieren, insbesondere Farbinformationen über den Feldbestand und/oder Pflanzenbestandteile. Farbinformationen über den Feldbestand ermöglichen eine Unterscheidung zwischen Nutzpflanzen 3 und Schadpflanzen und/oder zwischen Nutzpflanzen 3 und Boden 4. Farbinformationen über Pflanzenbestandteile umfassen beispielsweise die Farbe von Stängeln und die Farbe von Blättern, womit sich Stängel und Blätter voneinander unterscheiden lassen, was insbesondere bei windigen Bedingungen von Vorteil ist. Auch die Farbe innerhalb eines Stängels bzw. innerhalb der Nutzpflanzen 3 lässt sich als Teil der Farbinformationen erfassen und gibt Auskunft über den Grad der Verholzung von Stängeln o. dgl., was wiederum als Information dazu genutzt werden kann, um landwirtschaftliche Arbeitsaggregate, die insbesondere für die Ernte eingesetzt werden, insbesondere in ihrer Arbeitshöhe einzustellen.

Durch die Farbinformationen lassen sich auch Rückschlüsse auf den Reifegrad und/oder Stickstoffanteil der Pflanzen bzw. des Bodens ziehen, was ebenfalls in die Steuerung der landwirtschaftlichen Arbeitsmaschine 1 und/oder des landwirtschaftlichen Arbeitsaggregats 2 einfließen kann.

Die 3D-Kamera 7 kann hier und vorzugsweise zwischen einem 3D-Modus und einem 2D-Modus umgeschaltet werden, wobei die 3D-Kamera 7 in dem 3D-Modus die besagten 3D-Informationen generiert und in dem 2D-Modus die besagten Farbinformationen generiert.

Beispielsweise können zunächst im 2D-Modus die Farbinformationen gesammelt werden, womit Nutzpflanzen 3 vom Boden 4 unterschieden werden sollen. Wachsen nun viele Schadpflanzen zwischen den Nutzpflanzen 3, sind die Farbinformationen allerdings nur bedingt hilfreich, da im Wesentlichen alles grün erscheint. Hier wird dann ergänzend in den 3D-Modus geschaltet, wodurch 3D-Informationen, insbesondere die Pflanzenhöhe der einzelnen Pflanzen, erfasst werden können, wodurch eine Unterscheidung zwischen (höher wachsenden) Nutzpflanzen 3 und (niedrig wachsenden) Schadpflanzen bzw. Unkraut ermöglicht wird.

Es ist auch denkbar, zunächst den 3D-Modus einzusetzen, um als 3D-Informationen Höheninformationen über die Nutzpflanzen 3 zu erhalten. Hierbei kann es aber vorkommen, insbesondere wenn die Nutzpflanzen 3 relativ frisch ausgetrieben sind und noch keine große Wuchshöhe erreicht haben, dass aufgrund von Bodenunebenheiten allein auf Basis der 3D-Informationen nicht ausreichend sicher zwischen Nutzpflanzen 3 und Boden 4 unterschieden werden kann. In diesem Fall kann dann ergänzend im 2D-Modus über die Generierung von Farbinformationen der Bereich der (grünen) Nutzpflanzen 3 von dem (braunen) Boden 4 unterschieden werden.

Der 2D-Modus erlaubt es insbesondere, monoskopische Einzelbilder, also Bilder ohne 3D-Informationen, entlang einer der Blickachsen 10a, 10b aufzunehmen und zu den entsprechenden Farbinformationen weiterzuverarbeiten. Alternativ ist es auch denkbar, die im 3D-Modus erzeugten stereoskopischen Bildpaare heranzuziehen, indem die Einzelbilder, die die stereoskopischen Bildpaare bilden, jeweils einzeln verarbeitet werden, um dann daraus die Farbinformationen zu generieren.

Zusätzlich zu der vorangehend beschriebenen Kameraanordnung 6 mit 3D-Kamera 7 kann die landwirtschaftliche Arbeitsmaschine 1 und/oder das landwirtschaftliche Arbeitsaggregat 2 jeweils noch weitere Sensoranordnungen mit an sich bekannten Sensoren, wie Geschwindigkeitssensoren, Arbeitshöhensensoren und/oder Lenkwinkelsensoren, aufweisen (hier nicht dargestellt). Die generierten Sensordaten, darunter auch die 3D-Informationen und insbesondere Farbinformationen, können dann von einem Fahrerassistenzsystem 16 der landwirtschaftlichen Arbeitsmaschine 1 dazu verwendet werden, die landwirtschaftliche Arbeitsmaschine 1 und/oder das landwirtschaftliche Arbeitsaggregat 2, wie eingangs erwähnt, zu steuern.

### Bezugszeichenliste

- 1: Landwirtschaftliche Arbeitsmaschine
- 2: Landwirtschaftliches Arbeitsaggregat
- 3: Nutzpflanzen
- 4: Boden
- 5: Pflanzenreihen
- 6: Kameraanordnung
- 7: 3D-Kamera
- 8a, 8b: Kameraobjektive
- 9: Fahrzeug
- 10a, 10b: Blickachsen
- 11a, 11b: Optische Zentren
- 12: Blickrichtung
- 13: Basislinie
- 14: Ebene der Basislinie
- 15: Horizontale Ebene
- 16: Fahrerassistenzsystem

## Patentansprüche

1. Landwirtschaftliche Arbeitsmaschine, insbesondere Traktor, mit mindestens einem landwirtschaftlichen Arbeitsaggregat (2) zur Bearbeitung eines Feldbestands umfassend eine Vielzahl von Nutzpflanzen (3) und mit einer Kameraanordnung (6), die eine 3D-Kamera (7) aufweist, wobei die Kameraanordnung (6) konfiguriert ist, mittels der 3D-Kamera (7) 3D-Informationen des Feldbestands durch Aufnahme stereoskopischer Bildpaare entlang zweier verschiedener Blickachsen (10a, 10b) zu generieren, wobei die Blickachsen (10a, 10b) von optischen Zentren (11a, 11b) der 3D-Kamera (7) ausgehen, die durch eine Basislinie (13) miteinander verbunden sind,
**dadurch gekennzeichnet,**
**dass** die Basislinie (13) bezüglich der Horizontalen geneigt ist.

2. Landwirtschaftliche Arbeitsmaschine nach Anspruch 1, **dadurch gekennzeichnet, dass** die Basislinie (13) in einer Ebene (14) verläuft, die sich orthogonal zu einer horizontalen Ebene (15) erstreckt.

3. Landwirtschaftliche Arbeitsmaschine nach Anspruch 1 oder 2, **dadurch gekennzeichnet, dass** die Kameraanordnung (6) und/oder die 3D-Kamera (7) in einer zur horizontalen Ebene (15) geneigten, insbesondere zur horizontalen Ebene (15) orthogonalen Ebene (14), schwenkbar ist.

4. Landwirtschaftliche Arbeitsmaschine nach einem der vorhergehenden Ansprüche, **dadurch gekennzeichnet, dass** die 3D-Kamera (7) höhenverstellbar ist.

5. Landwirtschaftliche Arbeitsmaschine nach einem der vorhergehenden Ansprüche, dass die 3D-Kamera (7) zwei Kameraobjektive (8a, 8b) aufweist, von denen jeweils eine der beiden Blickachsen (10a, 10b) ausgeht, oder die 3D-Kamera (7) ein einzelnes Kameraobjektiv und einen die Bildpaare erzeugenden optischen Aufsatz aufweist.

6. Landwirtschaftliche Arbeitsmaschine nach einem der vorhergehenden Ansprüche, **dadurch gekennzeichnet, dass** die mittels der 3D-Kamera (7) generierten 3D-Informationen Informationen über die Pflanzenhöhe der Nutzpflanzen (3), über den Pflanzenabstand der Nutzpflanzen (3) quer zur Fahrtrichtung, über den Pflanzenabstand der Nutzpflanzen (3) in Fahrtrichtung und/oder über Pflanzenbestandteile der Nutzpflanzen (3), und/oder, Informationen über die Pflanzenhöhe von Schadpflanzen zwischen den Nutzpflanzen (3), über den Pflanzenabstand von Schadpflanzen zwischen den Nutzpflanzen (3) quer zur Fahrtrichtung, über den Pflanzenabstand von Schadpflanzen zwischen den Nutzpflanzen (3) in Fahrtrichtung und/oder über Pflanzenbestandteile der Schadpflanzen zwischen den Nutzpflanzen (3) sind.

7. Landwirtschaftliche Arbeitsmaschine nach einem der vorhergehenden Ansprüche, **dadurch gekennzeichnet, dass** die Kameraanordnung (6) konfiguriert ist, mittels der 3D-Kamera (7) Farbinformationen über den Feldbestand, und/oder, Farbinformationen über Pflanzenbestandteile der Nutzpflanzen (3) und/oder von Schadpflanzen zwischen den Nutzpflanzen (3) zu generieren.

8. Landwirtschaftliche Arbeitsmaschine nach einem der vorhergehenden Ansprüche, **dadurch gekennzeichnet, dass** die 3D-Kamera (7) zwischen einem 3D-Modus, in dem die 3D-Informationen generiert werden, und einem 2D-Modus, in dem die Farbinformationen generiert werden, umschaltbar ist.

9. Landwirtschaftliche Arbeitsmaschine nach Anspruch 8, dass im 2D-Modus monoskopische Einzelbilder entlang einer der Blickachsen (10a, 10b) aufgenommen und verarbeitet werden, oder die die stereoskopischen Bildpaare bildenden Einzelbilder jeweils einzeln verarbeitet werden, um daraus die Farbinformationen zu generieren.

10. Landwirtschaftliche Arbeitsmaschine nach einem der vorhergehenden Ansprüche, **dadurch gekennzeichnet, dass** sie ferner mindestens eine Sensoranordnung aufweist, die jeweils mindestens einen Sensordaten generierenden Sensor aus der Gruppe von Sensoren aufweist, umfassend einen Geschwindigkeitssensor, einen Arbeitshöhensensor und einen Lenkwinkelsensor.

11. Landwirtschaftliche Arbeitsmaschine nach einem der vorhergehenden Ansprüche, **dadurch gekennzeichnet, dass** sie ein Fahrerassistenzsystem (16) aufweist, das die landwirtschaftliche Arbeitsmaschine (1) und/oder das landwirtschaftliche Arbeitsaggregat (2) in Abhängigkeit der 3D-Informationen, der Farbinformationen und/oder der Sensordaten steuert.

## Claims

1. An agricultural working machine, in particular a tractor, with at least one agricultural working assembly (2) for working a field crop comprising a plurality of crop plants (3) and with a camera system (6) which has a 3D camera (7), wherein the camera system (6) is configured to generate, by means of the 3D camera (7), 3D information regarding the field crop by recording stereoscopic image pairs along two different viewing axes (10a, 10b), wherein the viewing axes (10a, 10b) emanate from optical centres (11a, 11b) of the 3D camera (7) and which are connected to each other by means of a base line (13),
**characterized in that**
the base line (13) is inclined with respect to the horizontal.

2. The agricultural working machine according to claim 1, **characterized in that** the base line (13) extends in a plane (14) which extends orthogonally to a horizontal plane (15).

3. The agricultural working machine according to claim 1 or claim 2, **characterized in that** the camera system (6) and/or the 3D camera (7) is pivotable in a plane (14) which is inclined with respect to the horizontal plane (15), in particular orthogonally to the horizontal plane (15).

4. The agricultural working machine according to one of the preceding claims, **characterized in that** the 3D camera (7) is adjustable in height.

5. The agricultural working machine according to one of the preceding claims, **characterized in that** the 3D camera (7) has two camera lenses (8a, 8b), from which one of the two viewing axes (10a, 10b) respectively emanates, or the 3D camera (7) has a single camera lens and an optical attachment which produces the image pairs.

6. The agricultural working machine according to one of the preceding claims, **characterized in that** the 3D information generated by means of the 3D camera (7) is information regarding the plant height of the crop plants (3), regarding the plant spacing of the crop plants (3) transversely to the direction of travel, regarding the plant spacing of the crop plants (3) in the direction of travel and/or regarding the plant components of the crop plants (3), and/or information regarding the plant height of harmful plants between the crop plants (3), regarding the plant spacing of harmful plants between the crop plants (3) transversely to the direction of travel, regarding the plant spacing of harmful plants between the crop plants (3) in the direction of travel and/or regarding the plant components of the harmful plants between the crop plants (3).

7. The agricultural working machine according to one of the preceding claims, **characterized in that** the camera system (6) is configured to generate, by means of the 3D camera (7), colour information regarding the field crop and/or colour information regarding plant components of the crop plants (3) and/or regarding harmful plants between the crop plants (3).

8. The agricultural working machine according to one of the preceding claims, **characterized in that** the 3D camera (7) can be switched between a 3D mode in which the 3D information is generated and a 2D mode in which the colour information is generated.

9. The agricultural working machine according to claim 8, in that in the 2D mode, monoscopic individual images along one of the viewing axes (10a, 10b) are recorded and processed, or the individual images forming the stereoscopic image pairs are respectively individually processed in order to generate the colour information therefrom.

10. The agricultural working machine according to one of the preceding claims, **characterized in that** it further comprises at least one sensor assembly which has at least one sensor which generates sensor data and which is selected from the group consisting of a speed sensor, a working height sensor, and a steering angle sensor.

11. The agricultural working machine according to one of the preceding claims, **characterized in that** it has a driver assistance system (16) which controls the agricultural working machine (1) and/or the agricultural working assembly (2) as a function of the 3D information, the colour information and/or the sensor data.

## Revendications

1. Machine de travail agricole, en particulier tracteur, comprenant au moins un organe de travail agricole (2) pour travailler une culture en champ incluant une pluralité de plantes utiles (3) et comprenant un agencement de caméra (6) qui comporte une caméra 3D (7), l'agencement de caméra (6) étant configuré pour générer, au moyen de la caméra 3D (7), des informations 3D de la culture en champ par enregistrement de paires d'images stéréoscopiques suivant deux axes de vision différents (10a, 10b), les axes de vision (10a, 10b) partant de centres optiques (11a, 11b) de la caméra 3D (7) qui sont reliés entre eux par l'intermédiaire d'une ligne de base (13), **caractérisée en ce que** la ligne de base (13) est inclinée par rapport à l'horizontale.

2. Machine de travail agricole selon la revendication 1, **caractérisée en ce que** la ligne de base (13) passe dans un plan (14) qui s'étend orthogonalement à un plan horizontal (15).

3. Machine de travail agricole selon la revendication 1 ou 2, **caractérisée en ce que** l'agencement de caméra (6) et/ou la caméra 3D (7) sont pivotants dans un plan (14) incliné par rapport au plan horizontal (15), en particulier orthogonal au plan horizontal (15).

4. Machine de travail agricole selon une des revendications précédentes, **caractérisée en ce que** la caméra 3D (7) est réglable en hauteur.

5. Machine de travail agricole selon une des revendications précédentes, en ce que la caméra 3D (7) comporte deux objectifs de caméra (8a, 8b) d'où part respectivement un des deux axes de vision (10a, 10b), ou la caméra 3D (7) comporte un seul objectif de caméra et un dispositif optique rapporté générant les paires d'images.

6. Machine de travail agricole selon une des revendications précédentes, **caractérisée en ce que** les informations 3D générées au moyen de la caméra 3D (7) sont des informations sur la hauteur de plante des plantes utiles (3), sur l'écartement de plantes des plantes utiles (3) transversalement au sens de la marche, sur l'écartement de plantes des plantes utiles (3) dans le sens de la marche et/ou sur des parties constitutives de plante des plantes utiles (3), et/ou des informations sur la hauteur de plante de plantes adventices entre les plantes utiles (3), sur l'écartement de plantes de plantes adventices entre les plantes utiles (3) transversalement au sens de la marche, sur l'écartement de plantes de plantes adventices entre les plantes utiles (3) dans le sens de la marche et/ou sur des parties constitutives de plante des plantes adventices entre les plantes utiles (3) .

7. Machine de travail agricole selon une des revendications précédentes, **caractérisée en ce que** l'agencement de caméra (6) est configuré pour générer, au moyen de la caméra 3D (7), des informations de couleur sur la culture en champ et/ou des informations de couleur sur des parties constitutives de plante des plantes utiles (3) et/ou de plantes adventices entre les plantes utiles (3).

8. Machine de travail agricole selon une des revendications précédentes, **caractérisée en ce que** la caméra 3D (7) est commutable entre un mode 3D, dans lequel les informations 3D sont générées, et un mode 2D, dans lequel les informations de couleur sont générées.

9. Machine de travail agricole selon la revendication 8, en ce que, en mode 2D, des images individuelles monoscopiques sont enregistrées et traitées suivant un des axes de vision (10a, 10b), ou les images individuelles formant les paires d'images stéréoscopiques sont traitées respectivement individuellement afin de générer les informations de couleur à partir de celles-ci.

10. Machine de travail agricole selon une des revendications précédentes, **caractérisée en ce qu'**elle comporte en outre au moins un agencement de capteur qui comporte respectivement au moins un capteur générant des données de capteur, issu du groupe de capteurs incluant un capteur de vitesse, un capteur de hauteur de travail et un capteur d'angle de braquage.

11. Machine de travail agricole selon une des revendications précédentes, **caractérisée en ce qu'**elle comporte un système d'assistance à la conduite (16) qui commande la machine de travail agricole (1) et/ou l'organe de travail agricole (2) en fonction des informations 3D, des informations de couleur et/ou des données de capteur.
